# FASCICULE DE BREVET EUROPEEN

(11) **EP 3 613 034 B1**
(45) Date de publication et mention de la délivrance du brevet: **07.09.2022**
(21) Numéro de dépôt: 18719976.5
(22) Date de dépôt: 13.04.2018
(51) Int. Cl.: G10K 11/172, B64C 1/40, B64D 33/02

(54) **GARNITURE SURFACIQUE POUR ABSORPTION ACOUSTIQUE**
OBERFLÄCHENVERKLEIDUNG ZUR SCHALLABSORPTION
SURFACE TRIM FOR ACOUSTIC ABSORPTION

(30) Priorité: 21.04.2017 FR 1753489
(43) Date de publication de la demande: 26.02.2020
(73) Titulaire: Office National d'Etudes et de Recherches Aérospatiales, 91120 Palaiseau (FR)
(72) Inventeur: SIMON, Frank, 31300 Toulouse (FR)
(74) Mandataire: Plasseraud IP
(86) Numéro de dépôt international: PCT/FR2018/050945
(87) Numéro de publication internationale: WO 2018/193192

(56) Documents cités:
- EP-A2- 1 310 658
- CN-A- 104 616 647
- JP-A- 2007 245 847
- US-A- 5 512 715
- US-A1- 2013 118 831
- US-A1- 2013 341 119

## Description

La présente invention concerne un élément de garniture surfacique, couramment appelé «liner» en anglais, qui est destiné à être appliqué sur une surface de base pour produire une absorption acoustique. Elle concerne aussi un procédé de fabrication d'une telle garniture surfacique.

Il est connu d'appliquer une garniture sur une surface de base pour réduire par absorption acoustique, une onde acoustique qui est réfléchie sur la surface de base à travers la garniture. La garniture comporte une paroi superficielle qui est maintenue à distance devant la surface de base par un espaceur rigide, par exemple par une structure en nid d'abeille. L'absorption acoustique est essentiellement produite par la paroi superficielle, qui comporte des trous pour permettre aux ondes acoustiques de traverser cette paroi superficielle, entre l'extérieur de la garniture d'une part, et d'autre part l'espace qui est intermédiaire entre la paroi superficielle et la surface de base. De telles garnitures sont notamment utilisées pour former une partie superficielle d'une nacelle de moteur d'avion, ou une partie d'un bord d'attaque de voilure d'avion. Typiquement, l'écartement entre la paroi superficielle et la surface de base est de l'ordre du quart de la longueur d'onde acoustique qui correspond au maximum d'efficacité d'absorption, pour produire un effet de résonance qui exacerbe l'absorption acoustique. Toutefois, de telles garnitures sont peu efficaces pour des fréquences acoustiques inférieures à 500 Hz (hertz).

Or les moteurs d'avion de type UHBR, pour «ultra high bypass ratio», ont des nacelles qui sont plus courtes et plus minces, et par conséquent nécessitent des garnitures dont l'efficacité d'absorption acoustique est améliorée en dessous de 500 Hz.

Dans un autre domaine d'application, le document CN2527764 propose d'augmenter l'absorption acoustique d'une paroi de canalisation à l'intérieur d'un appareil de soufflage d'air, en munissant cette paroi de trous comme la paroi superficielle d'une garniture telle que décrite plus haut, et en disposant en plus un tube à partir de chaque trou à l'opposé du passage de l'air soufflé. Les tubes remplissent l'espace qui est intermédiaire entre la paroi de canalisation de l'air soufflé et un coffrage externe de l'appareil. L'absorption acoustique est augmentée du fait de la longueur du trajet de propagation des ondes acoustiques dans chaque tube. Toutefois, l'effet de résonance que procure une cavité dont la profondeur est de l'ordre du quart de la longueur d'onde de l'onde acoustique à absorber, n'est pas mis en œuvre.

Un autre élément de garniture surfacique est décrit dans US 5512715 A.

Enfin, il a aussi été proposé de combiner l'effet de cavité résonante et l'effet de l'absorption qui est accrue par conduction des ondes acoustiques à l'intérieur de tubes, notamment dans l'article de F. Simon intitulé «Low frequency sound absorption of resonators with flexible tubes», Proceedings of ICA2013, June 2013, et lors de la présentation intitulée «Résonateurs acoustiques «basses fréquences» pour application en nacelle moteur avion», CFA 2016, Le Mans. En particulier, il a été suggéré que les tubes aient des longueurs individuelles qui sont inférieures à la profondeur de la cavité résonante. Un tel élément de garniture surfacique comprend :
- la paroi superficielle qui est munie de trous multiples, chaque trou formant individuellement un passage libre à travers cette paroi superficielle ;
- une structure d'espaceur, qui est connectée à une face interne de la paroi superficielle et qui est adaptée pour fixer un écartement entre celle-ci et une surface de base sur laquelle la garniture est appliquée, de façon à former au moins une cavité acoustique entre la face interne de la paroi superficielle et cette surface de base ; et
- des tubes, qui sont connectés à la paroi superficielle et qui s'étendent dans la cavité acoustique à partir de la face interne de la paroi superficielle en direction de la surface de base, chaque tube étant ouvert à deux extrémités opposées de ce tube, et étant dédié à l'un des trous de la paroi superficielle avec une section du trou qui est contenue dans une section interne du tube au niveau de paroi superficielle.

En outre, la longueur de chaque tube, mesurée selon une direction qui est perpendiculaire à la face interne de la paroi superficielle, est inférieure à l'écartement entre la paroi superficielle et la surface de base, de sorte qu'au moins 10% de cet écartement soit dépourvu de tubes, contre la surface de base.

A partir de cette situation, un but de la présente invention est d'augmenter encore l'absorption acoustique d'un élément de garniture surfacique, notamment pour des fréquences d'onde acoustique qui sont inférieures à 500 Hz.

Un but annexe de l'invention est de proposer un procédé de fabrication pour un tel élément de garniture surfacique dont l'absorption acoustique est augmentée.

Pour cela, un premier aspect de l'invention propose un élément de garniture surfacique tel que cité précédemment, mais dans lequel plusieurs des trous de la paroi superficielle présentent des formes de section de trou qui sont différentes, et telles qu'un quotient de périmètre de section de trou sur surface de section de trou varie entre certains au moins des trous, de façon à ce qu'un pic global apparent d'absorption acoustique de l'élément de garniture surfacique soit élargi pour des fréquences d'onde acoustique qui sont inférieures à 500 Hz.

En effet, à surface de section de trou égale, un trou à travers la paroi superficielle provoque une absorption acoustique à basse fréquence, qui est supérieure lorsque son périmètre de section est plus long. Plus précisément, un pic d'absorption principal à basse fréquence est déplacé vers des valeurs plus faibles de la fréquence acoustique lorsque le quotient du périmètre de section de trou sur la surface de section de trou augmente. Utiliser des trous qui ont des valeurs différentes pour ce quotient permet d'élargir un pic global apparent d'absorption acoustique de l'élément de garniture surfacique, qui est effectif à basse fréquence.

Dans des modes préférés de réalisation de l'invention, l'une au moins des caractéristiques additionnelles suivantes peut avantageusement être appliquée, seule ou en combinaison de plusieurs d'entre elles :
- une section de chaque trou peut être identique à la section interne du tube qui lui est associé, au niveau de la face interne de la paroi superficielle ;
- certains au moins des tubes peuvent avoir des longueurs respectives qui sont différentes, mesurées chacune selon la direction perpendiculaire à la face interne de la paroi superficielle ;
- chaque tube peut s'étendre perpendiculairement à la face interne de la paroi superficielle ;
- la longueur de chaque tube peut être inférieure à l'écartement entre la paroi superficielle et la surface de base, d'une distance qui est comprise entre 2 mm et 40 mm, selon la direction perpendiculaire à la face interne de la paroi superficielle ;
- pour au moins un des tubes, la section interne de ce tube peut varier en fonction d'une distance qui est mesurée à partir de la face interne de la paroi superficielle, le long de la direction perpendiculaire à cette face interne. Notamment, elle peut varier homothétiquement à partir d'un axe central du tube, avec un rapport d'homothétie qui varie en fonction de la distance à la paroi superficielle. En particulier, un écart entre l'axe central du tube et une surface interne du même tube, dans un plan méridien du tube, peut varier exponentiellement en fonction de la distance à la face interne de la paroi superficielle ;
- un bord périphérique de l'un au moins des trous peut être un polygone à plus de quatre côtés. En particulier, ce bord périphérique de trou peut posséder un motif fractal d'ordre supérieur ou égal à 2 ;
- l'ensemble des trous peut occuper une fraction surfacique qui est comprise entre 2% et 20%, de préférence entre 4% et 8%, de la face interne de la paroi superficielle ;
- la structure d'espaceur peut comprendre des cloisons rigides qui s'étendent perpendiculairement à la face interne de la paroi superficielle. Dans ce cas, la distance entre deux cloisons de la structure d'espaceur qui sont en vis-à-vis est préférablement inférieure à la moitié d'une plus petite longueur d'onde acoustique qui est prescrite pour l'élément de garniture surfacique ; et
- pour chaque trou, une plus petite distance entre deux parties de bord du trou qui sont parallèles et en vis-à-vis, est préférablement supérieure à deux fois une épaisseur de couche limite acoustique, cette dernière étant égale à (ρ·π·f/µ)^{-1/2}, où ρ est la masse volumique de l'air à 25°C (degré Celsius) et 10⁵ Pa (Pascal), µ est la viscosité de l'air dans les mêmes conditions, et f est une fréquence acoustique prescrite pour l'élément de garniture surfacique, comprise entre 100 Hz et 500 Hz, par exemple égale à 200 Hz.

De façon générale, des éléments de garniture surfacique qui sont conformes à l'invention peuvent avoir une forme adaptée pour constituer une partie superficielle d'une nacelle de moteur d'avion, une partie d'un bord d'attaque de voilure d'avion, une partie d'un dispositif d'absorption acoustique pour système de conditionnement d'air, ou une partie d'une paroi intérieure de soufflerie.

De façon générale aussi, une extrémité de la structure d'espaceur qui est opposée à la paroi superficielle, peut être adaptée pour être collée sur la surface de base.

En outre, un second aspect de l'invention propose un procédé de fabrication d'un élément de garniture surfacique qui est conforme au premier aspect, dans lequel les tubes, et optionnellement aussi la structure d'espaceur, sont formés par un procédé d'impression tridimensionnelle ou de moulage par injection à partir de la face interne de la paroi superficielle.

D'autres particularités et avantages de la présente invention apparaîtront dans la description ci-après d'exemples de réalisation non limitatifs, en référence aux dessins annexés, dans lesquels :
- la figure 1 est une vue en coupe d'un élément de garniture surfacique conforme à l'invention ;
- les figures 2a à 2g représentent des formes de section de trou qui peuvent être utilisées dans un élément de garniture surfacique conforme à l'invention ;
- les figures 3a, 3b, 3c et 3d sont des diagrammes d'absorption acoustique, en fonction de la fréquence d'onde acoustique ;
- les figures 4a et 4b sont des vues en perspective dans deux sens opposés, d'un élément de garniture surfacique qui est conforme à l'invention ; et
- les figures 5a et 5b sont des vues en section de tubes qui peuvent être utilisés dans différents modes de réalisation de l'invention, avec des longueurs de tubes qui sont variables, ou des tailles de section de tubes qui sont variables le long de chaque tube.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

Dans les figures, les références indiquées ont les significations suivantes :
- 100: élément de structure destiné à recevoir l'élément de garniture surfacique
- SB: surface de l'élément de structure 100, sur laquelle est appliqué l'élément de garniture surfacique, appelée surface de base
- 10: l'élément de garniture surfacique
- 1: paroi superficielle de l'élément de garniture surfacique 10
- FI: face interne de la paroi superficielle 1
- FE: face externe de la paroi superficielle 1
- 2: trous ouverts à travers la paroi superficielle 1
- 3: tube associé à chaque trou 2, s'étendant à partir de la face interne FI de la paroi superficielle 1
- 4: cloison, s'étendant à partir de la face interne FI de la paroi superficielle 1
- 4a: extrémité distale de chaque cloison 4, opposée à la paroi superficielle 1
- V: volume intermédiaire entre la face interne FI de la paroi superficielle 1 et la surface de base SB de l'élément de structure 100
- OA: onde acoustique incidente sur la face externe FE de la paroi superficielle 1
- A-A: axe central de chacun des tubes 3
- E: écartement entre la face interne FI de la paroi superficielle 1 et la surface de base SB de l'élément de structure 100
- I: longueur de chaque tube 3, mesurée le long de l'axe A-A du tube à partir de la face interne FI de la paroi superficielle 1
- dᵣ: distance résiduelle entre l'extrémité distale de chaque tube 3, opposée à la paroi superficielle 1, et la surface de base SB de l'élément de structure 100

L'élément de structure 100 peut être une partie d'une nacelle de moteur d'avion, par exemple. Toutefois, pour raison de clarté des figures mais de façon non-limitative, la surface de base SB de l'élément de structure 100 est représentée comme étant plane.

L'élément de garniture surfacique 10 constitue un habillage de l'élément de structure 100. Pour cela, l'élément de garniture surfacique 10 est fixé sur la surface SB de l'élément de structure 100, par exemple par collage des extrémités distales 4a des cloisons 4 sur la surface de base SB.

L'élément de structure 10 comprend la paroi superficielle 1, les tubes 3 et les cloisons 4. Les tubes 3 et les cloisons 4, qui sont rigides, peuvent être rapportés sur la face interne FI de la paroi superficielle 1, ou être continus de matière avec la paroi superficielle 1, par exemple en étant élaborés à partir de la face interne FI. Ils peuvent s'étendre perpendiculairement à la face interne FI de la paroi superficielle 1, mais pas nécessairement. Selon un mode de fabrication préféré de l'élément de structure 10, au moins les tubes 3, mais possiblement aussi les cloisons 4, peuvent être élaborés par impression tridimensionnelle ou en utilisant un procédé de moulage par injection.

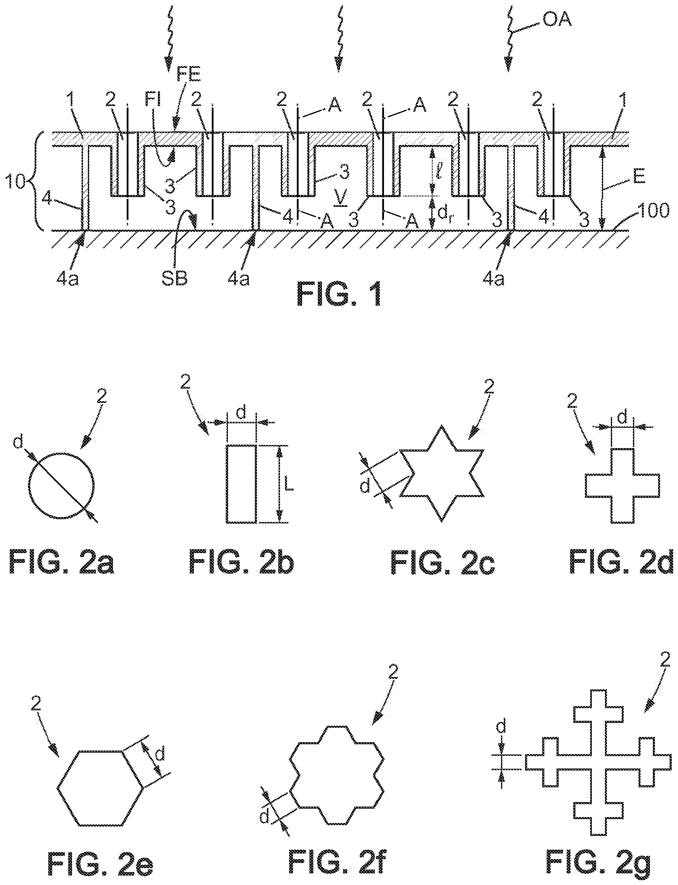

La longueur des cloisons 4 détermine l'écartement E (figure 1) lorsque l'élément de garniture surfacique 10 est fixé sur la surface SB de l'élément de structure 100. De préférence, les cloisons 4 ont des longueurs identiques de sorte que la face interne FI et la surface de base SB soient parallèles. En l'absence des tubes 3, l'écartement E serait sensiblement égal au quart d'une valeur de longueur d'onde pour l'onde acoustique OA, pour laquelle une absorption acoustique maximale est voulue. Mais, en présence des tubes 3, l'écartement E peut être de 1/20 à 1/30, par exemple, de la longueur d'onde acoustique pour laquelle l'absorption acoustique maximale est voulue. La fréquence d'absorption maximale, pour l'onde acoustique OA, peut donc être réduite grâce à la présence des tubes 3, d'un facteur 5 à 7 par rapport à un résonateur sans tubes 3, pour un écartement E donné. En outre, la distance entre deux cloisons 4 qui sont en vis-à-vis est préférablement inférieure à la moitié d'une plus petite longueur d'onde acoustique prescrite pour l'élément de garniture surfacique 10. Dans ces conditions, l'onde traverse la paroi superficielle 1 principalement par les trous 2, se propage le long des tubes 3, puis dans le volume V en direction de l'élément de structure 100, est réfléchie par la surface de base SB, se propage de nouveau dans le volume V mais en direction de la paroi superficielle 1, puis traverse de nouveau les tubes 3 et la paroi superficielle 1 vers l'extérieur. De façon connue, l'absorption de l'onde acoustique OA se produit essentiellement à chaque traversée des tubes 3 et de la paroi superficielle 1.

La géométrie de chaque cloison 4 peut être quelconque. En particulier, chaque cloison 4 peut présenter une ou plusieurs ouvertures tout en assurant la fonction d'espaceur rigide entre la paroi superficielle 1 et l'élément de structure 100.

Chaque trou 2 s'étend à partir de la face externe FE de la paroi superficielle 1 jusqu'à sa face interne FI, de façon à former un passage libre entre l'extérieur et le volume intermédiaire V. Il permet ainsi à une partie de l'onde acoustique OA de traverser la paroi superficielle 1. Le spectre d'absorption acoustique qui affecte l'onde OA lors d'une telle traversée est déplacé vers des valeurs de fréquence plus faibles lorsque le quotient du périmètre du trou 2 sur sa surface de section est plus élevé. Les tableaux 1 et 2 qui suivent indiquent les valeurs du quotient du périmètre de trou sur sa surface de section pour différentes formes et pour deux valeurs de surface de section de trou :

**Tableau 1 : pour une surface de section de chaque trou 2 de l'ordre de 1,27 mm²**

| Forme de section | ronde | fente | Etoile régulière à six branches avec angle de pointes à 60° | Motif fractal de Vicsek d'ordre 1 (croix) |
|---|---|---|---|---|
| Figure | 2a | 2b | 2c | 2d |
| Dimension(s) (mm) | diamètre d = 1,27 | largeur : d = 0,80 longueur: L = 1,60 | côté de branche d = 0,86 | épaisseur de branche d = 0,5 |
| Quotient périmètre/surface (mm⁻¹) | ~3,14 | ~4,3 | ~4,7 | ~4,8 |

**Tableau 2 : pour une surface de section de chaque trou 2 de l'ordre de 3,14 mm²**

| Forme de section | ronde | Hexagonale | Motif fractal dit d'île de Gosper, d'ordre 2 | Etoile régulière à six branches avec angle de pointes à 60° | Motif fractal de Vicsek d'ordre 1 (croix) | Motif fractal de Vicsek d'ordre 2 |
|---|---|---|---|---|---|---|
| Figure | 2a | 2e | 2f | 2c | 2d | 2g |
| Dimension (mm) | diamètre d = 2,0 | côté d = 1,1 | côté de l'île d = 0,42 | Côté de branche d = 1,35 | épaisseur de branche d = 0,79 | épaisseur de branche d = 0,355 |
| Quotient périmètre/surface (mm⁻¹) | ~2,0 | ~2,1 | ~2,4 | ~3,0 | ~3,0 | ~5,9 |

De façon générale, la plus petite distance entre deux parties du bord d'un trou qui sont parallèles et en vis-à-vis, est préférablement supérieure à deux fois une épaisseur δ_{ac} de couche limite acoustique, calculée selon la formule : δ_{ac} = (ρ·π·f/µ)^{-1/2}, où ρ est la masse volumique de l'air à 25°C (degré Celsius) et 10⁵ Pa (Pascal), µ est la viscosité de l'air dans les mêmes conditions, et f est la fréquence de l'onde acoustique OA, de préférence comprise entre 100 Hz et 500 Hz, par exemple égale à 200 Hz. Cette condition assure qu'une partie significative de l'onde acoustique OA pénètre dans le volume intermédiaire V à travers le trou 2.

Chaque trou 2 est muni d'un tube 3 qui s'étend à partir de la face interne FI de la paroi superficielle 1 en direction de l'élément de structure 100. Dans les modes de réalisation décrits, mais sans que cela soit indispensable pour l'invention, chaque tube 3 possède un axe longitudinal central A-A qui est rectiligne et perpendiculaire à la face interne FI à l'endroit du trou. En outre, la section interne de chaque tube 3 au niveau de la face interne FI est identique et confondue avec la section du trou 2 qui lui correspond. Par ailleurs, chaque tube 3 possède une longueur I qui est inférieure à 90% de l'écartement E entre la face interne FI de la paroi superficielle 1 et la surface de base SB de l'élément de structure 100.

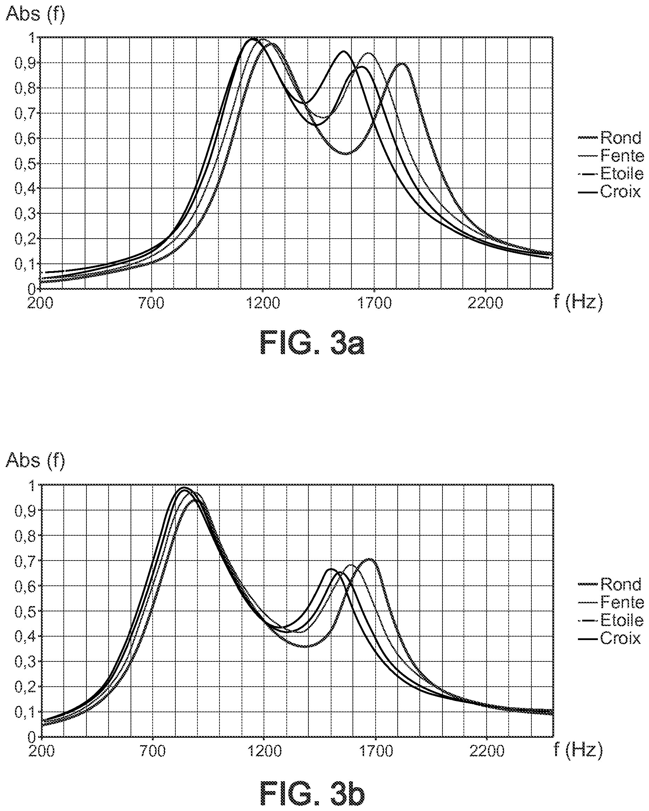

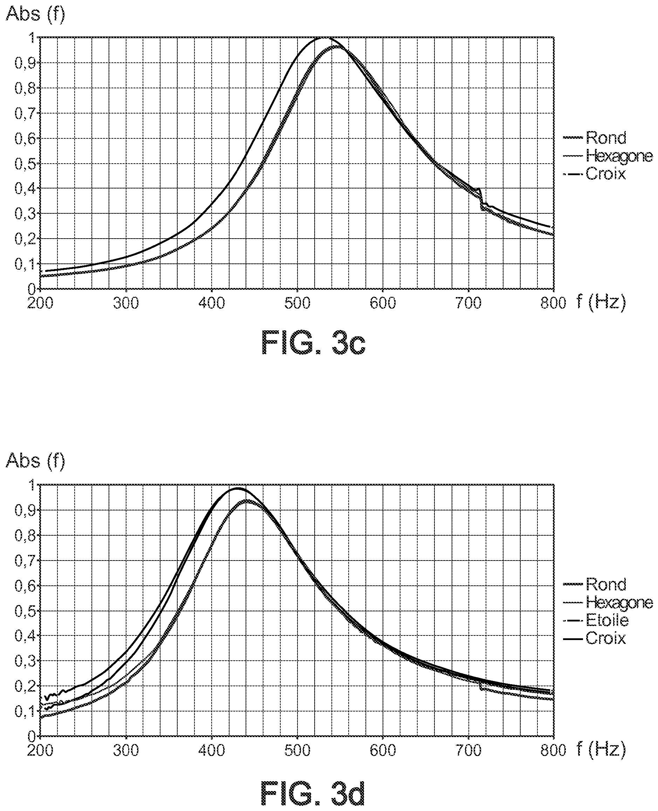

Dans ces conditions, les diagrammes des figures 3a, 3b, 3c, et 3d montrent chacun l'effet de la forme des trous 2 sur le spectre d'absorption de l'onde d'acoustique OA. L'axe horizontal de chaque diagramme repère la fréquence f de l'onde acoustique OA, exprimée en hertz (Hz), et l'axe vertical repère l'absorption spectrale noté Abs(f), normalisée par rapport à sa valeur maximale de 1.

Le diagramme de la figure 3a correspond à la valeur de 10 mm (millimètre) pour l'écartement E entre la face interne FI de la paroi superficielle 1 et la surface de base SB de l'élément de structure 100. Le diagramme de la figure 3b correspond à la valeur de 20 mm pour cet écartement E. Tous les tubes 3 ont une longueur I qui est égale à 5 mm (millimètre) et une surface de section interne qui est de l'ordre de 1,27 mm² pour les deux diagrammes des figures 3a et 3b. Pour chaque courbe de ces diagrammes, tous les trous 2 sont identiques, de la forme qui est indiquée dans l'encart de légende du diagramme correspondant et avec la (les) dimension(s) de trous qui est (sont) indiquée(s) dans le tableau 1 plus haut pour cette forme de trou. La comparaison entre ces deux diagrammes montre que le pic principal d'absorption à basse fréquence est déplacé vers les valeurs plus faibles de la fréquence f lorsque l'écartement E augmente, et qu'à valeur constante de l'écartement E, ce pic est aussi déplacé vers les valeurs plus faibles de la fréquence f lorsque le quotient du périmètre de trou sur la surface de section de trou augmente. En outre, la figure 3b montre un élargissement d'environ 7% de la bande de fréquence d'absorption principale inférieure, lorsque le quotient périmètre sur surface de section de trou augmente.

Pour déplacer le pic d'absorption autour de, ou en deçà de 500 Hz, la longueur I des tubes 3 peut être fixée à 15 mm pour un écartement E entre la face interne FI de la paroi superficielle 1 et la surface de base SB de l'élément de structure 100, de 20 mm (figure 3c) ou de 30 mm (figure 3d). Tous les trous 2 relatifs à chacune des courbes des figures 3c ou 3d ont encore une même forme, qui est indiquée dans l'encart de légende du diagramme correspondant, avec une surface de section de trou de l'ordre de 3,14 mm² (voir le tableau 2 plus haut pour les dimensions des trous qui correspondent aux courbes des figures 3c et 3d). On observe alors les mêmes comportements que lorsque la longueur I des tubes 3 est égale à 5 mm et que la surface de section de trou est de l'ordre de 1,27 mm² (figures 3a et 3b), c'est-à-dire une absorption maximale qui est gouvernée par le quotient du périmètre de trou sur la surface de section de trou.

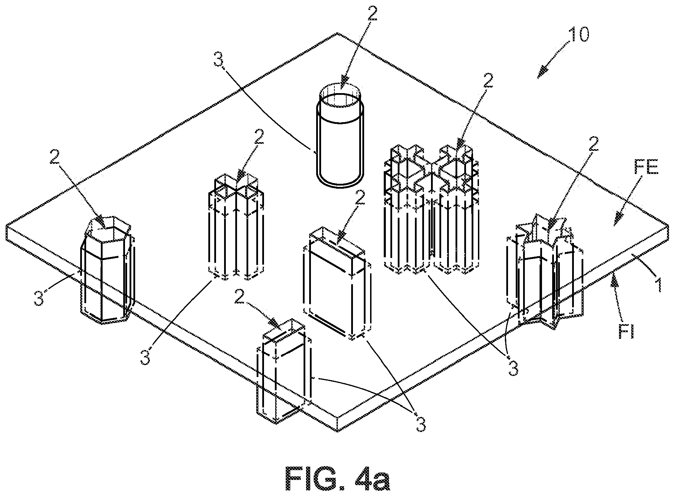

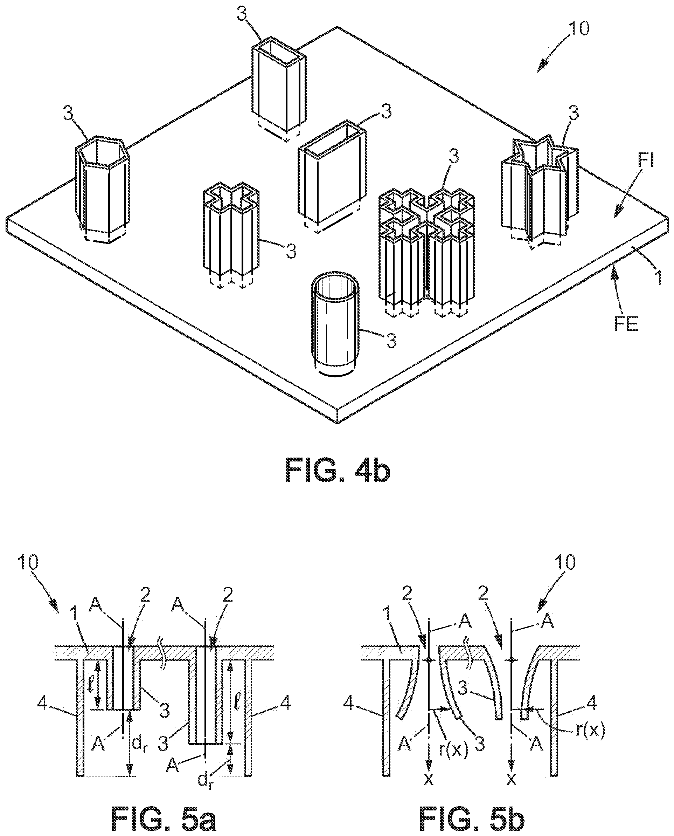

Un élément de garniture surfacique 10 qui est conforme à l'invention est illustré par les figures 4a et 4b. Pour raison de clarté des figures 4a et 4b, les cloisons 4 n'ont pas été représentées dans ces deux figures mais sont présentes dans l'élément réel de garniture surfacique. Dans cet élément de garniture 10, la forme des trous 2 varie entre plusieurs de ceux-ci, de façon à varier au sein du même élément de garniture, la valeur du quotient du périmètre de la section d'un trou sur sa surface de section. Ainsi, le même élément de garniture surfacique 10 possède simultanément des trous 2 d'au moins deux motifs différents parmi un motif rond, un motif en croix, en fente, hexagonal, en forme d'étoile à six branches, fractals de motifs variés, etc., et dont les orientations dans la face externe FE peuvent aussi varier. Le spectre d'absorption d'un tel élément de garniture surfacique 10 est donc une combinaison des spectres qui correspondent à chacune des formes de section de trou. Par conséquent, le spectre d'absorption résultant présente un pic principal d'absorption à faible fréquence acoustique qui est élargi, à valeur constante pour l'écartement E. Ce pic élargi produit notamment des valeurs d'absorption acoustique qui sont supérieures lorsque la fréquence acoustique f est inférieure à 500 Hz. Le gain d'efficacité d'absorption qui est obtenu de cette façon, à 500 Hz, peut être de 7% ou plus.

Le tube 3 qui est associé à chaque trou 2 peut avoir une forme de section interne qui est identique à la section du trou 2 correspondant. Dans le mode de réalisation de l'invention qui est illustré par les figures 4a et 4b, la section interne de chaque tube 3 est invariante le long de chaque tube, et tous les tubes 3 ont une même longueur.

La figure 5a illustre des premières variantes de l'invention, dans lesquelles certains des tubes 3 de l'élément de garniture 10 des figures 4a et 4b peuvent avoir des longueurs I qui varient d'un tube à l'autre. La distance libre résiduelle, notée dᵣ, qui existe entre l'extrémité distale d'un des tubes 3, opposée à la paroi superficielle 1, et l'élément de structure 100, est égale à E - I. Pour des éléments de garniture surfacique qui sont conformes à l'invention, cette distance libre résiduelle dᵣ est supérieure à 10% de l'écartement E. Cette condition est maintenue lorsque tous les tubes 3 ont des longueurs identiques. De façon générale, elle garantit une combinaison optimale entre l'effet de résonance qui est produit par l'écartement E et l'absorption acoustique accrue qui est produite par les formes variées des trous 2. De préférence, la distance libre résiduelle dᵣ peut être supérieure à 2 mm pour tous les tubes 3 de l'élément de garniture surfacique 10.

La figure 5b illustre des secondes variantes de l'invention, dans lesquelles certains des tubes 3 de l'élément de garniture 10 peuvent avoir des sections internes qui varient en fonction de la distance x à partir de la face interne FI de la paroi superficielle 1. Par exemple, la section interne d'un tube 3 peut varier entre deux plans qui sont perpendiculaires à l'axe A-A de ce tube et qui correspondent à des valeurs différentes pour la distance x, de façon homothétique avec un rapport d'homothétie qui dépend de la distance x. Pour x=0, la section interne du tube peut être identique à celle du trou 2 qui lui correspond. Alors, la distance r entre la surface interne d'un tube 3 et l'axe central A-A de ce tube peut varier en fonction de la distance x d'une façon qui est identique dans tous les plans méridiens qui contiennent l'axe A-A. r(x) est ainsi le rapport d'homothétie introduit plus haut. Dans des réalisations différentes de l'invention, r(x) peut être un segment de fonction affine, croissante ou décroissante, ou un segment de fonction exponentielle, qui peut encore être croissante ou décroissante, ou un segment de parabole, un segment d'hyperbole, etc. Possiblement, r(x) peut être une combinaison linéaire de plusieurs de ces fonctions et, de façon générale, r(x) peut être une fonction quelconque tant que l'extrémité distale du tube 3 est ouverte. Ainsi, chaque tube 3 dont la section est variable le long de son axe central A-A peut constituer un pavillon conique, exponentiel, parabolique, hyperbolique, etc, qui couple l'espace intermédiaire V au passage libre que constitue le trou 2 correspondant à travers la paroi superficielle 1. De façon connue, un tel pavillon qui s'évase en s'écartant de la face interne FI de la paroi superficielle 1 favorise le transfert de l'énergie acoustique à travers le trou 2. En outre, un tel pavillon présente une fréquence de coupure F_{c}, en deçà de laquelle l'onde acoustique OA n'est plus transmise à travers le pavillon (correspondant à f < F_{c}). Cette fréquence de coupure est F_{c} = C/(4π·α), où α est une longueur caractéristique de variation de la fonction r(x).

Les caractéristiques des premières et secondes variantes de l'invention, illustrées par les figures 5a et 5b, peuvent aussi être combinées dans des modes de réalisation améliorés.

Le nombre de trous 2 par unité de surface de la paroi superficielle 1, peut être compris entre1 trou/cm² (trou par centimètre-carré) et 8 trous/cm². Compte-tenu de la surface de section de chaque trou, qui peut être comprise entre 1 mm² et 4 mm², par exemple, l'ensemble des trous peut occuper une fraction surfacique de la paroi superficielle 1 de 4 % à 8%, à titre d'exemple.

Enfin, les cloisons 4 peuvent former un ensemble de cellules séparées qui sont juxtaposées sur la face interne FI de la paroi superficielle 1. Un seul trou 2, avec son tube associé 3, peut être contenu dans chaque cellule, mais il est aussi possible de disposer plusieurs trous 2, avec les tubes 3 qui leur sont associés, à l'intérieur d'une même cellule.

Il est entendu que l'invention peut être reproduite en modifiant des aspects secondaires de celle-ci par rapport aux exemples qui ont été décrits en détail ci-dessus. En particulier, les cloisons 4 peuvent être remplacées par une structure d'espaceur qui possède une géométrie différente, et une répartition quelconque par rapport aux trous 2. En outre, les valeurs numériques qui ont été citées ne l'ont été qu'à titre d'exemples.

## Revendications

1. Elément de garniture surfacique (10) destiné à être appliqué sur une surface de base (SB) pour réduire par absorption acoustique, une onde acoustique (OA) qui est réfléchie sur la surface de base à travers l'élément de garniture surfacique, ledit élément de garniture surfacique comprenant :
- une paroi superficielle (1) qui est munie de trous multiples (2), chaque trou formant individuellement un passage libre à travers ladite paroi superficielle ;
- une structure d'espaceur, qui est connectée à une face interne (FI) de la paroi superficielle (I) et adaptée pour fixer un écartement (E) entre ladite paroi superficielle et la surface de base (SB), de façon à former au moins une cavité acoustique entre la face interne de la paroi superficielle et la surface de base ; et
- des tubes (3), qui sont connectés à la paroi superficielle (1) et s'étendent dans la cavité acoustique à partir de la face interne (FI) de ladite paroi superficielle en direction de la surface de base (SB), chaque tube étant ouvert à deux extrémités opposées dudit tube, et étant dédié à l'un des trous (2) de la paroi superficielle avec une section du trou qui est contenue dans une section interne du tube au niveau de paroi superficielle,
dans lequel une longueur de chaque tube (3) est inférieure à l'écartement (E) entre la paroi superficielle (1) et la surface de base (SB), ladite longueur de tube étant mesurée selon une direction perpendiculaire à la face interne (FI) de ladite paroi superficielle, de sorte qu'au moins 10% de l'écartement entre la paroi superficielle et la surface de base, contre ladite surface de base, soit dépourvu de tubes,
et **caractérisé en ce que** plusieurs des trous (2) de la paroi superficielle (1) présentent des formes de section de trou qui sont différentes, et telles qu'un quotient de périmètre de section de trou sur surface de section de trou varie entre certains au moins desdits trous, de façon à ce qu'un pic global apparent d'absorption acoustique de l'élément de garniture surfacique soit élargi pour des fréquences d'onde acoustique qui sont inférieures à 500 Hz.

2. Elément de garniture surfacique (10) selon la revendication 1, dans lequel certains au moins des tubes (3) ont des longueurs respectives qui sont différentes, mesurées chacune selon la direction perpendiculaire à la face interne (FI) de la paroi superficielle (1).

3. Elément de garniture surfacique (10) selon la revendication 1 ou 2, dans lequel chaque tube (3) s'étend perpendiculairement à la face interne (FI) de la paroi superficielle (1).

4. Elément de garniture surfacique (10) selon l'une quelconque des revendications précédentes, dans lequel la longueur de chaque tube (3) est inférieure à l'écartement (E) entre la paroi superficielle (1) et la surface de base (SB), d'une distance qui est comprise entre 2 mm et 40 mm, selon la direction perpendiculaire à la face interne (FI) de ladite paroi superficielle.

5. Elément de garniture surfacique (10) selon l'une quelconque des revendications précédentes, dans lequel, pour au moins un des tubes (3), la section interne dudit tube varie en fonction d'une distance mesurée à partir de la face interne (FI) de la paroi superficielle (1) le long de la direction qui est perpendiculaire à ladite face interne de la paroi superficielle.

6. Elément de garniture surfacique (10) selon l'une quelconque des revendications précédentes, dans lequel un bord périphérique de l'un au moins des trous (2) est un polygone à plus de quatre côtés.

7. Elément de garniture surfacique (10) selon la revendication 6, dans lequel le bord périphérique de l'un au moins des trous (2) possède un motif fractal d'ordre supérieur ou égal à 2.

8. Elément de garniture surfacique (10) selon l'une quelconque des revendications précédentes, ayant une forme adaptée pour constituer une partie superficielle d'une nacelle de moteur d'avion, une partie d'un bord d'attaque de voilure d'avion, une partie d'un dispositif d'absorption acoustique pour système de conditionnement d'air, ou une partie d'une paroi intérieure de soufflerie.

9. Elément de garniture surfacique (10) selon l'une quelconque des revendications précédentes, dans lequel une extrémité de la structure d'espaceur qui est opposée à la paroi superficielle (1), est adaptée pour être collée sur la surface de base (SB).

10. Procédé de fabrication d'un élément de garniture surfacique (10) qui est conforme à l'une quelconque des revendications précédentes, suivant lequel les tubes (3), et optionnellement aussi la structure d'espaceur, sont formés par un procédé d'impression tridimensionnelle ou de moulage par injection à partir de la face interne (FI) de la paroi superficielle (1).

## Patentansprüche

1. Oberflächenausstattungselement (10), welches dazu gedacht ist, auf eine Grundfläche (SB) aufgebracht zu werden, um durch Schallabsorption eine Schallwelle (OA) zu reduzieren, die von der Grundfläche durch das Oberflächenausstattungselement reflektiert wird, wobei das Oberflächenausstattungselement Folgendes umfasst:
- eine Oberflächenwand (1), die mit mehreren Löchern (2) versehen ist, wobei jedes Loch einzeln einen freien Durchgang durch die Oberflächenwand bildet;
- eine Abstandshalterstruktur, die mit einer Innenseite (FI) der Oberflächenwand (I) verbunden ist und dazu ausgebildet ist, einen Abstand (E) zwischen der Oberflächenwand und der Grundfläche (SB) festzulegen, um wenigstens einen akustischen Hohlraum zwischen der Innenseite der Oberflächenwand und der Grundfläche zu bilden; und
- Rohre (3), die mit der Oberflächenwand (1) verbunden sind und sich in den akustischen Hohlraum von der Innenseite (FI) der Oberflächenwand in Richtung der Grundfläche (SB) erstrecken, wobei jedes Rohr an zwei gegenüberliegenden Enden des Rohrs offen ist und einem der Löcher (2) in der Oberflächenwand gewidmet ist mit einem Abschnitt des Lochs, der in einem Innenabschnitt des Rohrs an der Oberflächenwand enthalten ist,
wobei eine Länge jedes Rohrs (3) kleiner ist als der Abstand (E) zwischen der Oberflächenwand (1) und der Grundfläche (SB), wobei die Rohrlänge in einer Richtung senkrecht zur Innenseite (FI) der Oberflächenwand gemessen ist, so dass wenigstens 10 % des Abstands zwischen der Oberflächenwand und der Grundfläche gegen die Grundfläche frei von Rohren sind,
und **dadurch gekennzeichnet, dass** mehrere der Löcher (2) der Oberflächenwand (1) Lochquerschnittsformen aufweisen, die unterschiedlich sind, und so, dass ein Quotient aus Lochquerschnittsperimeter zu Lochquerschnittsfläche zwischen wenigstens einigen der Löcher variiert, so dass ein offensichtlicher Gesamtpeak der Schallabsorption des Oberflächenausstattungselements bei Frequenzen der akustischen Welle, die unter 500 Hz liegen, verbreitert ist.

2. Oberflächenausstattungselement (10) nach Anspruch 1, wobei wenigstens einige der Rohre (3) jeweils unterschiedliche Längen aufweisen, gemessen jeweils in der Richtung senkrecht zur Innenseite (FI) der Oberflächenwand (1).

3. Oberflächenausstattungselement (10) nach Anspruch 1 oder 2, wobei sich jedes Rohr (3) senkrecht zur Innenseite (FI) der Oberflächenwand (1) erstreckt.

4. Oberflächenausstattungselement (10) nach einem der vorhergehenden Ansprüche, wobei die Länge jedes Rohrs (3) um einen Abstand zwischen 2 mm und 40 mm kleiner ist als der Abstand (E) zwischen der Oberflächenwand (1) und der Grundfläche (SB) in der Richtung senkrecht zur Innenseite (FI) der Oberflächenwand.

5. Oberflächenausstattungselement (10) nach einem der vorhergehenden Ansprüche, wobei sich bei wenigstens einem der Rohre (3) der Innenquerschnitt des Rohrs in Abhängigkeit von einem Abstand ändert, der von der Innenseite (FI) der Oberflächenwand (1) entlang der Richtung gemessen ist, die senkrecht zu der Innenseite der Oberflächenwand ist.

6. Oberflächenausstattungselement (10) nach einem der vorhergehenden Ansprüche, wobei ein peripherer Rand wenigstens eines der Löcher (2) ein Polygon mit mehr als vier Seiten ist.

7. Oberflächenausstattungselement (10) nach Anspruch 6, wobei der periphere Rand wenigstens eines der Löcher (2) ein fraktales Muster der Größenordnung größer oder gleich 2 aufweist.

8. Oberflächenausstattungselement (10) nach einem der vorhergehenden Ansprüche, welches eine Form aufweist, die dazu ausgebildet ist, einen Oberflächenteil einer Flugzeugtriebwerksgondel, einen Teil einer Vorderkante eines Flugzeugflügels, einen Teil einer schallabsorbierenden Vorrichtung für eine Klimaanlage oder einen Teil einer Innenwand eines Windkanals zu bilden.

9. Oberflächenausstattungselement (10) nach einem der vorhergehenden Ansprüche, wobei ein Ende der Abstandshalterstruktur, das der Oberflächenwand (1) gegenüberliegt, dazu ausgebildet ist, auf die Grundfläche (SB) geklebt zu werden.

10. Verfahren zur Herstellung eines Oberflächenausstattungselements (10), das einem der vorhergehenden Ansprüche entspricht, wobei die Rohre (3) und optional auch die Abstandshalterstruktur durch einen dreidimensionalen Druck- oder Spritzgussprozess von der Innenseite (FI) der Oberflächenwand (1) aus geformt werden.

## Claims

1. Surface liner member (10) intended to be applied onto a base surface (SB) in order to reduce, by acoustic absorption, an acoustic wave (OA) that is reflected on the base surface through the surface liner member, said surface liner member comprising:
- an external wall (1) which is provided with multiple holes (2), each hole individually forming an open passage through said external wall;
- a spacer structure, which is connected to an inner face (FI) of the external wall (1) and adapted to set a gap (E) between said external wall and the base surface (SB), so as to form at least one acoustic cavity between the inner face of the external wall and the base surface; and
- tubes (3), which are connected to the external wall (1) and which extend into the acoustic cavity from the inner face (FI) of said external wall, towards the base surface (SB), each tube being open at two opposite ends of said tube and being dedicated to one of the holes (2) in the external wall with a hole section that is contained in an inner section of the tube at the external wall,
wherein a length of each tube (3) is smaller than the gap (E) between the external wall (1) and the base surface (SB), said tube length being measured along a direction perpendicular to the inner face (FI) of said external wall, so that at least 10% of the gap between the external wall and the base surface, against said base surface, is devoid of tubes,
and **characterized in that** several of the holes (2) in the external wall (1) have different cross-sectional shapes, such that a quotient of a hole cross-sectional perimeter divided by a hole cross-sectional area varies between at least some of said holes, so that an overall apparent peak of acoustic absorption of the surface liner element is enlarged for acoustic wave frequencies that are less than 500 Hz.

2. Surface liner member (10) according to claim 1, wherein at least some of the tubes (3) have respective lengths which are different, each measured along the direction perpendicular to the inner face (FI) of the external wall (1).

3. Surface liner member (10) according to claim 1 or 2, wherein each tube (3) extends perpendicularly to the inner face (FI) of the external wall (1).

4. Surface liner member (10) according to any one of the preceding claims, wherein the length of each tube (3) is less than the gap (E) between the external wall (1) and the base surface (SB), by a distance of between 2 mm and 40 mm, along the direction perpendicular to the inner face (FI) of said external wall.

5. Surface liner member (10) according to any one of the preceding claims, wherein, for at least one of the tubes (3), the internal cross-section of said tube varies as a function of a distance measured from the inner face (FI) of the external wall (1), along the direction perpendicular to said inner face of the external wall.

6. Surface liner member (10) according to any one of the preceding claims, wherein a peripheral edge of at least one of the holes (2) is a polygon with more than four sides.

7. Surface liner member (10) according to claim 6, wherein the peripheral edge of at least one of the holes (2) has a fractal pattern of second order or higher than second order.

8. Surface liner member (10) according to any one of the preceding claims, having a shape adapted to form a external portion of an aircraft engine nacelle, a portion of a leading edge of an aircraft wing, a portion of an acoustic absorption device for an air conditioning system, or a portion of a blower inner wall.

9. Surface liner member (10) according to any one of the preceding claims, wherein an end of the spacer structure which is opposite to the external wall (1) is adapted to be bonded to the base surface (SB).

10. Method for manufacturing a surface liner member (10) which is in accordance with any one of the preceding claims, wherein the tubes (3), and optionally also the spacer structure, are formed by a method of three-dimensional printing or injection molding from the inner face (FI) of the external wall (1).
